# EUROPÄISCHE PATENTSCHRIFT

(11) **EP 3 612 676 B1**
(45) Veröffentlichungstag und Bekanntmachung des Hinweises auf die Patenterteilung: **25.11.2020**
(21) Anmeldenummer: 18719808.0
(22) Anmeldetag: 17.04.2018
(51) Int. Cl.: E01B 3/44

(54) **SCHWELLE FÜR DEN GLEISOBERBAU**
SLEEPER FOR THE TRACK SUPERSTRUCTURE
TRAVERSE POUR SUPERSTRUCTURE DE VOIE

(30) Priorität: 18.04.2017 DE 102017108224
(43) Veröffentlichungstag der Anmeldung: 26.02.2020
(73) Patentinhaber: Vossloh Fastening Systems GmbH, 58791 Werdohl (DE)
(72) Erfinder: BÖSTERLING, Winfried, 58809 Neuenrade (DE); LIU, Duo, 44263 Dortmund (DE)
(74) Vertreter: Cohausz & Florack
(86) Internationale Anmeldenummer: PCT/EP2018/059794
(87) Internationale Veröffentlichungsnummer: WO 2018/192930

(56) Entgegenhaltungen:
- WO-A1-2005/100691
- WO-A1-2008/048095
- WO-A1-2014/104873
- DE-A1- 19 606 469

## Beschreibung

Die Erfindung betrifft eine Schwelle für den Gleisoberbau, die in einem Stück aus einem Kunststoffmaterial hergestellt ist, wobei die Schwelle eine langgestreckte Grundform mit zwei Endabschnitten aufweist, die durch einen Mittelabschnitt der Schwelle verbunden und auf Abstand gehalten sind und an deren Oberseite jeweils eine Aufstandfläche für jeweils eine auf dem jeweiligen Endabschnitt abzustützende Schiene vorgesehen ist.

Im Gleisoberbau sind die Schwellen üblicherweise auf einem Schotterbett ("Schotterbettoberbau") oder auf einem festen Untergrund ("feste Fahrbahn") abgestützt, der beispielsweise durch Betonplatten oder desgleichen gebildet ist. Ebenso kommen Schwellen im Bereich von Brücken als so genannte "Brückenbalken" zum Einsatz.

Die Schwellen tragen die Schienen, die das Gleis bilden, auf dem das jeweilige Schienenfahrzeug fährt, und halten die Schienen in ihrer lagerichtigen Position. Die Befestigung der Schiene an der Schwelle erfolgt dabei üblicherweise mittels eines Schienenbefestigungssystems, das in der Regel eine Führungsplatte aufweist, die die Schiene seitlich führt.

Im Gebrauch sind die Schwellen hohen Belastungen ausgesetzt. Sie müssen nicht nur das Gewicht der Schienen und des Schienenfahrzeugs, sondern beim Überfahren durch ein Schienenfahrzeug auch hohe dynamische Belastungen aufnehmen. Gleichzeitig müssen sie raue und stark wechselnde Umweltbedingungen ertragen, die beispielsweise durch große Temperatur- oder Feuchtigkeitsschwankungen gekennzeichnet sind. Auch setzt die natürliche Strahlung des Sonnenlichts, insbesondere deren UV-Anteil, den Schwellen im praktischen Einsatz zu.

Konventionelle Schwellen bestehen aus Holz, Stahl oder Beton. Holzschwellen sind vergleichsweise teuer, haben jedoch ein geringes Gewicht, das sich insbesondere im Brückenbau positiv niederschlägt. Auch eignen sich Holzschwellen aufgrund ihrer geringen Höhe zum Einsatz unter beengten Platzverhältnissen und verhalten sich in einem gewissen Maße elastisch. Dies hat den Vorteil, dass sich mit ihnen ohne größeren Aufwand Schienenbefestigungen bilden lassen, die in Schwerkraftrichtung eine gewisse, für die Lebensdauer der Schiene günstige Nachgiebigkeit zeigen.

Den Vorteilen von Holzschwellen steht gegenüber, dass aufwändige und unter Umweltgesichtspunkten zum Teil bedenkliche Maßnahmen erforderlich sind, um Holzschwellen gegen Verrottung zu schützen. Wegen der Verrottungsgefahr müssen Holzschwellen zudem in vergleichbar kurzen Abständen inspiziert und gepflegt werden. Auch erweist sich die Formstabilität von Holzschwellen für viele Anwendungen als unzureichend.

Betonschwellen sind dagegen verschleißfester und lassen sich, wenn auch mit höherem Fertigungsaufwand, so doch kostengünstiger als Holzschwellen herstellen. Ihre große Formsteifigkeit trägt zur Stabilität des Gleises und zur ordnungsgemäßen Positionierung der Schienen des Gleises auch über lange Einsatzdauern bei. Dies macht Betonschwellen insbesondere für den Bau von Strecken geeignet, die von Zügen mit hoher Geschwindigkeit befahren werden.

Den Vorteilen von Betonschwellen steht gegenüber, dass sie ein hohes Gewicht aufweisen und nicht elastisch sind. Die mangelnde Elastizität macht zusätzliche Maßnahmen erforderlich, um die im jeweiligen Schienenbefestigungspunkt geforderte Nachgiebigkeit zu bewerkstelligen.

Auch erweisen sich Betonschwellen bei extremen Witterungswechseln oder unter ungünstigen Umweltbedingungen, wie beispielsweise beim Einsatz in einem salzhaltigen Umfeld, anfällig für eine schnell fortschreitende Alterung.

Als Alternative zu den konventionellen Holz- oder Betonschwellen sind Schwellen vorgeschlagen worden, die aus einem Kunststoffmaterial gefertigt sind. Um einer solchen Kunststoffschwelle die erforderliche Festigkeit zu verleihen, werden üblicherweise hochwertige, oft faserverstärkte Kunststoffe verarbeitet, die entsprechend teuer sind.

Dabei ist es bekannt, dass die Formsteifigkeit von Kunststoffschwellen durch eine Bewehrung unterstützt werden kann, die in den Kunststoff eingelegt ist und aufgrund seiner Formgebung und Materialeigenschaften einen entscheidenden Beitrag zur Belastbarkeit der Schwelle leistet. Dazu sind die Bewehrungen in der Regel so ausgelegt, dass sie den überwiegenden Teil der beim Überfahren der Schwelle durch ein Schienenfahrzeug auftretenden Kräfte aufnehmen. Gleichzeitig kann durch eine geeignete Gestaltung der Form der Schwelle ihre Steifigkeit positiv beeinflusst werden.

Beispiele dafür, dass es durch geeignete Anordnung von Bewehrungselementen gelingen kann, auch aus vergleichbar schwachen LDPE-Materialien Schwellen herzustellen, sind in der WO 2008/048095 A1 beschrieben. Diese bekannten Kunststoffschwellen weisen in der üblichen Weise eine langgestreckte Form auf und zeichnen sich dadurch aus, dass in den Kunststoff jeweils mindestens zwei, bevorzugt vier stangenartige Bewehrungen aus Stahl eingelegt sind. Diese Stahlbewehrungsstangen sind jeweils in den an die Längskanten der Schwelle angrenzenden Bereichen angeordnet und erstrecken sich über die Länge der Schwelle. Dabei wird besonderen Wert darauf gelegt, dass die Bewehrungsstangen unabhängig voneinander in dem Kunststoff der Schwelle liegen, d.h. nicht direkt miteinander verbunden sind. Die Bewehrungsstangen sind folglich nur über den Kunststoff der Schwelle lagefixiert. Auf diese Weise soll es gelingen, ausreichend formsteife Kunststoffschwellen auch aus einem LDPE-Kunststoff zu fertigen, der an sich eine für diese Zwecke nur unzureichende Festigkeit besitzt. Die Formsteifigkeit der Kunststoffschwelle wird dabei zusätzlich dadurch unterstützt, dass die Endabschnitte, auf denen im Gebrauch die zu befestigenden Schienen positioniert und befestigt werden, mittels eines besonders ausgeformten Mittelabschnitts der Schwellen miteinander verbunden sind. So weist der Mittelabschnitt jeweils zwei parallel zueinander in Längsrichtung der Schwellen ausgerichtete Stegabschnitte auf, die die Endabschnitte der Schwelle miteinander verbinden und sich dabei über die gesamte Länge der Schwellen erstrecken. Gleichzeitig sind die Stegabschnitte durch einen Deckelabschnitt, der auf ihnen aufliegt, oder einen Bodenabschnitt, auf dem sie stehen, miteinander verbunden. Auch der jeweilige Deckel- oder Bodenabschnitt erstreckt sich über die gesamte Länge der Schwelle. Der Querschnitt des Mittelabschnitts der Schwellen ist dementsprechend U- bzw. umgekehrt U-förmig geformt, wobei in den freien Endbereichen der Stege und im Zwickelbereich zwischen dem jeweiligen Deckel- oder Bodenabschnitt jeweils eine Bewehrungsstange angeordnet ist.

Als Alternative zu den hochpreisigen Kunststoffen, wie sie beim voranstehend erläuterten Stand der Technik eingesetzt werden, ist in der DE 20 2011 050 077 U1 ein Kunststoff-Sand-Gemisch für die Herstellung von Schwellen für den Gleisoberbau vorgeschlagen worden. Der Sand und die Polymere des Kunststoffs sollen dabei derart miteinander verbunden sein, dass einerseits eine ausreichende Formsteifigkeit, anderseits auch eine dem Verhalten der Holzschwelle vergleichbare Elastizität erreicht wird. Die so erzeugten Schwellen weisen eine quaderförmige Gestalt ohne Verstärkungsbewehrungen auf, können aber an ihrer Unterseite zackenartige Vorsprünge aufweisen, um ihren Halt beispielsweise auf einem Schotterbett zu optimieren.

Neben dem voranstehend erläuterten Stand der Technik ist aus der WO 2014/104873 A1 eine Schwelle für den Gleisoberbau bekannt, die aus Kunststoff mit einer darin eingebetteten Bewehrung hergestellt ist und Endabschnitte mit jeweils einer Aufstandfläche für die abzustützenden Schienen eines Gleises aufweist. Zwischen den Endabschnitten erstreckt sich ein stegförmiger Mittelabschnitt, in dem die Bewehrung bezogen auf die Längsachse der Schwelle symmetrisch ausgebildet ist und sich jeweils mit einem oberen Ast ausgehend von dem einen Endabschnitt, bei dem der zugeordnete Teilabschnitt des betreffenden Asts im unteren Viertel der Höhe der Schwelle angeordnet ist, in Längsrichtung der Schwelle erstreckt. Ausgehend von dem im einen Endabschnitt tief angeordneten Teilabschnitt verlaufen die Äste der Bewehrung im Mittelabschnitt der Schwelle in Richtung der Oberseite der Schwelle, so dass sie im mittleren Bereich der Schwelle im oberen Viertel der Höhe der Schwelle angeordnet sind. In Folge der Formgebung und spiegelsymmetrischen Anordnung der Bewehrungsäste ist die Bewehrung im Kunststoffmaterial der Schwelle so verankert, dass sie mit dem Kunststoff verklammert und auch unter mechanischer oder thermischer Last ein fester Verbund zwischen dem Kunststoff und der Bewehrung gesichert ist.

Ein Verfahren, dass die Herstellung solcher aus einem Sand-Kunststoff-Gemisch bestehenden Schwellen ermöglichen soll, ist in der EP 1 299 321 B1 beschrieben. Praktische Versuche haben allerdings gezeigt, dass sich mit der bekannten Vorgehensweise im großtechnischen Maßstab keine Schwellen erzeugen lassen, die den sich in der Praxis stellenden Anforderungen genügen.

Vor dem Hintergrund des voranstehend erläuterten Standes der Technik hat sich die Aufgabe ergeben, eine aus einem Kunststoffmaterial gefertigte Kunststoffschwelle so zu gestalten, dass sie auch bei Verwendung von preisgünstigen, einen hohen Sandanteil aufweisenden Kunststoff-Sand-Gemischen eine optimierte Festigkeit besitzen und zuverlässig herstellbar sind.

Die Erfindung hat diese Aufgabe durch die in Anspruch 1 angegebene Schwelle gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Schwelle für den Gleisoberbau, die in einem Stück aus einem Kunststoffmaterial hergestellt ist, weist demnach eine langgestreckte Grundform mit zwei Endabschnitten auf, die durch einen Mittelabschnitt der Schwelle verbunden und auf Abstand gehalten sind und an deren Oberseite jeweils eine Aufstandfläche für jeweils eine auf dem jeweiligen Endabschnitt abzustützende Schiene vorgesehen ist, wobei in den Mittelabschnitt eine sich in Längsrichtung der Schwelle erstreckende Bewehrung eingebettet ist.

Dabei erstreckt sich bei einer erfindungsgemäßen Schwelle die Bewehrung über die Länge des Mittelabschnitts und ist in einem dem Mittelabschnitt zugeordneten Randbereich der Endabschnitte der Schwelle im jeweiligen Endabschnitt verankert, wobei die Bewehrung ganz oder teilweise im oberen Viertel der Höhe der Schwelle angeordnet ist.

Indem nun erfindungsgemäß die Bewehrung nach Art einer endlosen Schlaufe mit zwei Längsabschnitten und zwei Schmalabschnitten geformt ist, von denen sich jeweils einer zwischen den einander zugeordneten Enden der Längsabschnitte erstreckt und in einem der Randbereiche der Endabschnitte verankert ist, wird eine dauerhaft sichere Anbindung des Mittelabschnitts der Schwelle an die Endabschnitte erzielt.

Wie beim eingangs erläuterten Stand der Technik ist auch bei einer erfindungsgemäßen Schwelle die Dauerhaltbarkeit und das Lastaufnahmevermögen dadurch optimiert, dass in das Kunststoffmaterial des Mittelabschnitts der Schwelle eine sich in Längsrichtung des Stegs erstreckende Bewehrung eingebettet ist.

Die erfindungsgemäße Bewehrung verbessert dabei einerseits die Belastbarkeit des Mittelabschnitts und wirkt seiner übergroßen Durchbiegung entgegen, die andernfalls durch das Gewicht eines Schienenfahrzeugs verursacht werden könnte, das über die im Gebrauch von der Schwelle getragenen Schienen fährt.

Andererseits ist die Bewehrung fest in den Endabschnitten verankert und zwar an einer Stelle, nämlich einem dem Mittelabschnitt der Schwelle zugeordneten Randbereich der Endabschnitte, in dem der betreffende Endabschnitt mit dem Mittelabschnitt zusammentrifft. Auf diese Weise lässt sich auch bei vergleichbar spröden, jedoch aufgrund ihrer Kostenvorteile und übrigen Gebrauchseigenschaften bevorzugten Kunststoff-Sand-Gemischen der voranstehend erläuterten Art auf einfache Weise eine dauerhaft rissfreie Anbindung der Endabschnitte an den Mittelabschnitt gewährleisten.

Indem die Bewehrung sich jeweils mindestens bis in denjenigen Bereich der Endabschnitte hinein erstreckt, auf dem die Aufstandfläche für die abzustützende Schiene ausgebildet ist, lässt sich eine Anbindung der Endabschnitte an den Mittelabschnitt der Schwelle herstellen, die auch maximalen Belastungen der Schwelle standhält. Dies gilt insbesondere dann, wenn der Mittelabschnitt vergleichbar filigran, in der nachfolgend erläuterten Weise stegartig ausgebildet ist. Insbesondere dadurch, dass sich die Bewehrung ausgehend vom Mittelabschnitt bis über den die Aufstandfläche tragenden Bereich der Endabschnitte hinaus erstreckt und so geformt ist, dass sie diesen Bereich zumindest abschnittsweise, optimaler Weise aber vollständig, umgreift, lässt sich der dauerhaft sichere Zusammenhalt zwischen dem Mittelabschnitt und mit ihm verbundenen Endabschnitte gewährleisten.

Besonders überraschend und für die Praxis von besonderer Bedeutung ist, dass sich eine Positionierung der Bewehrungen ausschließlich im oberen Viertel der Höhe der Schwelle als besonders günstig im Hinblick auf das Durchbiegungsverhalten und die Dauerhaltbarkeit des Mittelabschnitts herausgestellt hat. Durch eine Positionierung der Bewehrung in großer Nähe zur freien Oberseite des Mittelabschnitts kann die Bewehrung besonders effektiv die Zugkräfte aufnehmen, die auf dem Mittelabschnitt lasten, wenn die Endabschnitte beim Überfahren der Schwelle durch ein Schienenfahrzeug mit dessen Gewicht belastet werden. Dieser Effekt wirkt sich insbesondere dann aus, wenn der Mittelabschnitt, wie nachfolgend näher erläutert, gemäß einer vorteilhaften optionalen Ausgestaltung stegförmig ausgebildet ist.

Ergänzend zu der im oberen Viertel der Höhe der Schwelle eingelegten Bewehrung kann erforderlichenfalls eine weitere Bewehrung in der Schwelle eingelegt sein. Diese kann beispielsweise in der unteren Hälfte oder im unteren Viertel der Höhe der Schwelle liegen. Die zusätzliche Bewehrung kann sich in Längsrichtung der Schwelle betrachtet über die im oberen Viertel der Höhe der Schwelle angeordnete Bewehrung hinaus in die Endabschnitte erstrecken. So kann die im oberen Viertel der Höhe der Schwelle angeordnete Bewehrung speziell zur Anbindung des Mittelabschnitts der Schwelle dienen, indem sie im jeweiligen Anschlussbereich zwischen dem Mittelabschnitt und dem jeweiligen Endabschnitt verankert ist, wogegen die untere Bewehrung zur Optimierung der Tragfähigkeit der Endabschnitte in dem Bereich dient, auf dem die Aufstandfläche für die Schiene gebildet ist. Besonders günstig erweist sich dies bei einer nachfolgend erläuterten stegförmigen Gestaltung des Mittelabschnitts.

Die im oberen Viertel der Höhe der Schwelle angeordnete Bewehrung kann auch derart einstückig geformt sein, dass sie einen dem Mittelabschnitt der Schwelle zugeordneten Mittelteil, der sich im oberen Viertel der Höhe der Schwelle erstreckt, und zwei Endteile besitzt, von denen jeweils einer an ein Ende des Mittelteils der Bewehrung angeschlossen ist und die sich jeweils ausgehend vom zugeordneten Ende des Mittelteils zunächst in Richtung der Unterseite der Schwelle erstrecken und anschließend in einen sich parallel zur Unterseite der Schwelle und über den Bereich des Endabschnitts erstrecken, auf dem die Aufstandfläche für die Schiene gebildet ist.

Als besonders vorteilhaft erweist sich die erfindungsgemäße Positionierung der Bewehrung und die dadurch bewirkte feste Anbindung des Mittelabschnitts an die Endabschnitte der Schwelle dann, wenn der Mittelabschnitt durch mindestens einen den Abstand zwischen den Endabschnitten frei überbrückenden Steg gebildet ist, dessen in quer zur Längserstreckung der Schwelle ausgerichteter Breitenrichtung gemessene Breite kleiner ist als die ebenfalls in Breitenrichtung gemessene Breite der Endabschnitte, und die Bewehrung in den Steg eingebettet ist.

Mit der erfindungsgemäß in den bei dieser optionalen Ausgestaltung stegförmig ausgebildeten Mittelabschnitt eingelegten Bewehrung gelingt es somit, auch den schmalen geformten und im Gebrauch nur mit einer minimierten Fläche auf dem jeweiligen Untergrund sitzenden Mittelabschnitt dauerhaft sicher und hoch belastbar an die Endabschnitte anzubinden.

Die Erfindung geht hierbei von der überraschenden Feststellung aus, dass durch eine Minimierung der Kontaktfläche zwischen dem Untergrund, auf dem die Schwelle im Gebrauch sitzt, und dem Mittelabschnitt der Schwelle ein deutlich verbessertes Durchbiegungsverhalten beim Überfahren der auf der Schwelle abgestützten Schienen durch ein Schienenfahrzeug erzielt wird. So zeigen erfindungsgemäße Schwellen trotz ihrer volumen- und gewichtsmäßig minimierten Gestaltung im praktischen Einsatz ein Neigungs- und Spuränderungsverhalten, das den sich in der Praxis stellenden Anforderungen sicher genügt.

Die Breite des optional stegförmigen Mittelabschnitts ist wesentlich geringer als seine Länge und auch geringer als seine Höhe, so dass er nach Art eines aufrecht auf seiner schmalen Längsseite stehenden Balkens die Endabschnitte miteinander verbindet. Ein solcherart ausgerichteter Balken-Steg besitzt eine maximale Steifigkeit gegenüber einer in Schwerkraftrichtung wirkenden Belastung und setzt damit trotz seiner vergleichbar filigranen Form einer übermäßigen Durchbiegung maximalen Widerstand entgegen.

Gleichzeitig hat es sich im Hinblick auf die Belastbarkeit einer erfindungsgemäßen Schwelle als überraschend vorteilhaft erwiesen, dass durch die optional stegförmige Ausbildung des Mittelabschnitts die Kontaktfläche, mit der die Schwelle im Gebrauch auf dem Untergrund sitzt, minimiert ist. Dies erweist sich insbesondere dann als günstig, wenn eine erfindungsgemäße Schwelle im Gebrauch auf einem Schotterbett abgestützt ist. Durch die minimierte Kontaktfläche kann die Schwelle, wenn die von ihr getragenen Schienen von einem Schienenfahrzeug befahren werden, in Folge des dann auf ihr lastenden Gewichts stärker in den Untergrund einsinken als bei Schwellen mit Kontaktflächen, die sich vollständig über die maximale Breite und Länge des von der jeweiligen Schwelle eingenommenen Raums erstreckt. Bei einer erfindungsgemäß gestalteten Schwelle weicht der Untergrund den über den Steg konzentriert eingeleiteten, in Schwerkraftrichtung wirkenden Kräften aus, setzt also dem Steg nur verminderte Gegenkräfte entgegen, so dass lokale Belastungsspitzen im optional stegförmigen Mittelabschnitt der Schwelle und damit einhergehend eine unzulässig hohe Durchbiegung sowie eine durch Verzug bedingte ungünstige Änderung der Schwellengeometrie im Auflager der Schwelle vermieden werden. Im Ergebnis wird so durch die besondere Gestaltung der Erfindung erreicht, dass die erfindungsgemäße Schwelle trotz ihrer filigranen Gestaltung eine maximale Spurtreue der auf ihr montierten Schienen gewährleistet.

Die Biegesteifigkeit des optional mindestens einen als Mittelabschnitt der Schwelle vorgesehenen Stegs kann zusätzlich dadurch optimiert werden, dass die Höhe des Stegs über den Abstand zwischen den Endabschnitten der Schwelle variiert ist. So kann es beispielsweise zweckmäßig sein, den Steg nach Art eines Gewölbebogens auszubilden beziehungsweise seine Höhe in Bezug auf die Ebene, in der die Endabschnitte in Montagestellung mit ihrer Unterseite sitzen, ausgehend von dem einen Endabschnitt kontinuierlich bis beispielsweise zur auf die Länge bezogenen Mitte ansteigen zu lassen, um sie dann bis zum anderen Endabschnitt wieder kontinuierlich geringer werden zu lassen. Der Höhenverlauf folgt damit der Belastungsverteilung, der der optional stegförmige Mittelabschnitt in der Praxis ausgesetzt ist, wenn ein Schienenfahrzeug die auf der Schwelle abgestützten Schienen befährt.

Im Hinblick auf die Montage und Herstellung einer erfindungsgemäßen Schwelle erweist es sich als vorteilhaft, wenn die Schwelle mindestens in Bezug auf ihre Längsachse spiegelsymmetrisch geformt ist. Eine im Hinblick auf eine einfache und fehlerfreie Montage besonders zweckmäßige Ausgestaltung der Schwelle ergibt sich dabei dann, wenn die Schwelle auch in Bezug auf ihre quer zur Längsachse und parallel zur Unterseite der Schwelle ausgerichteten, durch ihre Mitte verlaufende Breitenachse symmetrisch ausgebildet ist. Durch eine derart symmetrische Ausgestaltung können Verwechslungen bei der Ausrichtung der Schwelle vermieden werden, da wegen der symmetrischen Formgebung keine bestimmte Zuordnung der Seiten oder Abschnitte der Schwelle zu einer bestimmten Position beachtet werden muss.

Bei einer besonders praxisgerechten Ausgestaltung der Erfindung umfasst der Mittelabschnitt optional zwei in Breitenrichtung beabstandet angeordnete Stege. Diese Ausgestaltung gewährt optimierte Gebrauchseigenschaften bei gleichzeitig maximierter Dauerhaltbarkeit der Schwelle. So erlauben die beiden Stege eine weitere Verkleinerung ihrer Abmessungen bei gleichzeitig weiterhin minimierter Kontaktfläche zwischen dem Untergrund und der Schwelle. Als besonders vorteilhaft erweist es sich hier, dass die Stege im mittleren Bereich der Schwelle zwischen sich einen zum Untergrund hin offenen Freiraum begrenzen. In diesen Freiraum kann Material des Untergrunds eindringen, so dass eine intensive Verklammerung mit dem Untergrund erreicht werden kann. Dies gilt insbesondere dann, wenn eine derart gestaltete erfindungsgemäße Schwelle zum Abstützen eines Gleises auf einem Schotterbett eingesetzt wird. Der Schotter dringt in die von den Stegen umgrenzten Öffnungsbereiche und bewirkt eine effektive Absicherung der Schwelle gegen Querverschieben in Folge der Querkräfte, die beim Überfahren der von der Schwelle getragenen Schienen durch ein Schienenfahrzeug oder in Folge der Längenveränderungen auftreten, zu denen es bei den Schienen insbesondere bei extremen Wechseln der Umgebungstemperaturen kommt.

Im Fall, dass mindestens zwei nach optionaler Maßgabe der Erfindung gestaltete Stege im Mittelabschnitt der Schwelle vorgesehen sind, liegt optimaler Weise in jedem der Stege des Mittelabschnitts eine nach Maßgabe der Erfindung angeordnete und mit den Endabschnitten verankerte Bewehrung, um eine dauerhaft sichere Anbindung jedes Stegs an den jeweiligen Endabschnitt und eine ebenso optimierte Aussteifung aller Stege zu gewährleisten. Die Symmetrie der Formgebung einer erfindungsgemäßen Schwelle erweist sich in diesem Zusammenhang als besonders zweckmäßig, wenn die Stege nicht linear gestreckt sind, sondern einen winkligen, kurvigen oder in anderer Weise an die jeweiligen Belastungen, Funktionen oder örtlichen Gegebenheiten angepassten Verlauf aufweisen.

Wie die symmetrische Ausbildung der Schwelle trägt es dabei zur einfachen, fehlerfreien Montage bei, wenn bei zwei optional vorgesehenen Stegen im Mittelabschnitt der Schwelle diese Stege gleich geformt sind. Verwechselungen bei der ordnungsgemäßen Ausrichtung der Schwelle während der Montage und ungleichförmige Belastungen im praktischen Einsatz lassen sich so sicher vermeiden.

Zu einem optimierten Biegeverhalten unter den in der Praxis auftretenden Lasten und zum angestrebten Eindringen von Material des Untergrunds in den von den Stegen umgrenzten, bodenseitigen offenen Freiraum kann auch beitragen, dass die Stege jeweils einen ausgehend von dem ersten Endabschnitt in Breitenrichtung nach außen verlaufenden Abschnitt und einen zweiten Abschnitt aufweist, der an das vom ersten Endabschnitt abgewandte Ende des nach außen verlaufenden Abschnitts des jeweiligen Stegs angeschlossen ist und zu dem zweiten Abschnitt zurückverläuft. Bei derart ausgerichteten Stegen weist der von den Stegen umgrenzte Freiraum im Bereich der Mitte der Schwelle eine maximale Weite auf, so dass dort ein maximales füllbares Volumen zur Verfügung steht.

Besonders gut zur Herstellung erfindungsgemäß gestalteter Schwellen ist das in der Internationalen Patentanmeldung PCT/EP2016/059064 beschriebene Verfahren und das in dieser Internationalen Patentanmeldung ebenfalls vorgestellte Material geeignet. Der Inhalt der PCT/EP2016/059064 wird hiermit durch Bezugnahme in den Text der vorliegenden Anmeldung aufgenommen. Das in der PCT/EP2016/059064 beschriebene Verfahren zum Herstellen einer Schwelle zum Einsatz im Gleisoberbau umfasst mindestens folgende Arbeitsschritte:
a) Bereitstellen einer Mischung, die zu 10 - 60 Masse-% aus einem Granulat eines durch Wärmezufuhr verformbaren Kunststoffs und als Rest aus einem Sand mit einer Schüttdichte von 1,4 - 2,0 g/cm³ besteht;
b) Erwärmen der Mischung auf eine Temperatur von 150 - 200 °C;
c) Einfüllen der Mischung in eine die Schwelle abbildende Pressform;
d) Verpressen der Mischung in der Form mit einem in der Mischung gemessenen Pressdruck von 1 - 5 MPa über eine Pressdauer von bis zu 60 min;
e) Entformen der Schwelle aus der Form.

Im fertig verfestigten Zustand sind derartig gemischte und verarbeitete Kunststoff-Sand-Gemische vergleichbar spröde. Durch die in der PCT/EP2016/059064 beschriebene Art und Weise der Verarbeitung und Mischung von Sand und Kunststoff und die erfindungsgemäße Gestaltung gelingt es dennoch, eine Schwelle zur Verfügung zu stellen, die nicht nur kostengünstig herstellbar ist, sondern neben einer hohen Formsteifigkeit und Dauerhaltbarkeit ein optimiertes Dämpfungsverhalten besitzt.

Eine erfindungsgemäße Schwelle besteht hierbei vorzugsweise aus einem Kunststoff-Sand-Gemisch, dessen Kunststoffgehalt 10-60 Masse-% beträgt und dessen Rest aus Sand mit einem mittleren Korndurchmesser von 0,1 - 0,5 mm besteht, wobei die Schüttdichte des Sands vorteilhafterweise 1,4 - 2,0 g/cm³ beträgt. Kunststoffgehalte von 20 - 40 Masse-% haben sich hier als besonders vorteilhaft erwiesen. Als Kunststoff können für die erfindungsgemäße Herstellung einer Schwelle grundsätzlich alle Kunststoffe verwendet werden, die sich mit einem nach den erfindungsgemäßen Vorgaben beschaffenen Sand mischen lassen und unter Wärme- und Druckzufuhr so verdichtet werden können, dass sich eine ausreichende Anbindung zwischen dem Kunststoff und den in ihm eingebetteten Körnern des Sands ergibt. Insbesondere eignen sich hierfür die üblicherweise als "thermoplastisch" bezeichneten Kunststoffe.

Besonders geeignet sind hier Kunststoffgranulate, die aus einem Polypropylen-Granulat (PP-Granulat) oder einem Polyethylen-Granulat (PE-Granulat) bestehen, wobei sich PP-Granulate als besonders zweckmäßig herausgestellt haben. Auch ein Granulat, das aus einem hochdichten Polyethylen (HDPE-Granulat) besteht, kann für die Erfindung geeignet sein, wenn sich besondere Anforderungen an das Kunststoffmaterial ergeben.

Das für die Herstellung einer erfindungsgemäßen Schwelle vorgesehene Kunststoffgranulat kann sortenrein aus einer einzigen Kunststoffgranulatsorte bestehen oder als Mischung unterschiedlicher Kunststoffgranulatsorten zum Einsatz kommen.

Im Fall, dass eine Kunststoffgranulatmischung verwendet werden soll, hat es sich als günstig erwiesen, wenn das Kunststoffgranulat zu 40 - 60 Masse-% aus PP-Granulat und als Rest aus PE- bzw. HDPE-Granulat besteht.

Ebenfalls als günstig im Hinblick auf eine gute Formfüllung beim Verpressen des erfindungsgemäß in die formgebende Form gefüllten Sand-Kunststoff-Gemischs hat es sich als günstig erwiesen, wenn der gemäß DIN EN ISO 1133 bei einer Prüftemperatur von 230 °C und einer Lastmasse von 2,16 kg bestimmte Melt Flow MFI/230/2,16 (siehe auch: A.B. Mathur, I.S. Bhardway, "Testing and Evaluation of Plastics", Allied Publishers PVT. Limited, 2003, ISBN 81-7764-436-X) des Kunststoffs oder der Kunststoffe, aus dem das Kunststoffgranulat besteht, jeweils größer 20 ist.

Eine gute Durchmischung des Kunststoffmaterials mit dem Sand des erfindungsgemäß verarbeiteten Sand-Kunststoff-Gemischs kann dadurch gewährleistet werden, dass die Körnung des Granulats an die Körnung des Sands angepasst ist.

Der mit dem Kunststoffgranulat vermischte Sand des Kunststoff-Sand-Gemischs, aus dem die erfindungsgemäße Schwelle vorzugsweise besteht, besitzt eine Schüttdichte von 1,4 - 2,0 g/cm³, wobei sich Sande mit einer Schüttdichte von mindestens 1,6 g/cm³ als besonders günstig herausgestellt haben. Bei Sanden mit innerhalb der erfindungsgemäßen Vorgaben gewählter Schüttdichte ist eine gute Durchmischung mit dem Kunststoffgranulat und demzufolge eine gute Anbindung der Sandkörner an die sie in der fertigen Schwelle umgebende Kunststoffmatrix gewährleistet, die sich aus den im Zuge der Erwärmung und des Pressvorgangs aufschmelzenden und verdichteten Kunststoffgranulat-Körnern bildet. Als besonders günstig haben sich dabei Schüttdichten von bis zu 1,9 g/cm³, insbesondere mindestens 1,7 g/cm³, erwiesen.

Praktische Versuche haben ergeben, dass Sand, der aus Körnern mit einem mittleren Korndurchmesser von 0,1 - 0,5 mm besteht, sich besonders gut für die erfindungsgemäßen Zwecke eignet. So ergibt sich bei einer solchen Körnung eine besonders gute Einbettung der Sandkörner in die Kunststoffmatrix der fertig hergestellten Schwelle. Hierdurch wird nicht nur die Stabilität der Schwelle optimiert, sondern auch ihr Dämpfungsverhalten und ihre Elastizität für den Einsatz als Schwelle in einem Gleis für Schienenfahrzeuge optimal eingestellt.

Als Sand für die erfindungsgemäßen Zwecke kommen sämtliche Sande in Frage, deren Schüttdichte als Mindestanforderung den erfindungsgemäßen Vorgaben entspricht.

Praktische Erprobungen haben gezeigt, dass an die Sorte des im Werkstoff einer erfindungsgemäßen Schwelle vorgesehenen Sands keine besonderen Anforderungen gestellt werden. Als vorteilhaft, jedoch nicht zwingend notwendig, haben sich gebrochene Sande erwiesen. Hierbei handelt es sich in der Regel um künstlich erzeugte Sande, wie sie beispielsweise beim Recyceln von auf Sandbasis hergestellten Produkten, wie erfindungsgemäßen Schwellen, entstehen. Gebrochene Sande zeichnen sich dadurch aus, dass ihre Körner scharfkantige Vorsprünge an ihrem Umfang aufweisen, über die sie sich mit den an ihnen angrenzenden Körnern verhaken und so zu einer besonders hohen Festigkeit und Durchbruchsicherheit der erfindungsgemäß erzeugten Schwelle beitragen.

Die Härte der Körner des erfindungsgemäß verwendeten Sands weist vorteilhafterweise eine nach Mohs (s. beispielsweise Detlef Gysau, "Füllstoffe", 3. Auflage, Hannover: Vincentz Network, 2014, ISBN: 9783866308398) bestimmte Härte von 5 - 8 auf, wobei sich Sande mit Körnern, die eine nach Mohs bestimmte Härte von mindestens 6, insbesondere mindestens 7, aufweisen, als besonders geeignet erwiesen haben.

Erfindungsgemäß erzeugte Schwellen weisen eine hohe Sicherheit gegen Durchbrechen auf.

Gemäß DIN EN 13146-10 durchgeführte Tests haben für die erfindungsgemäß hergestellte Schwellen regelmäßig hohe, strengsten Anforderungen genügende Ausziehwiderstände ergeben, so dass die diesbezüglich in der Praxis gestellten Anforderungen stets sicher erfüllt werden.

Insbesondere dann, wenn der Mittelabschnitt der Schwelle durch zwei Stege gebildet ist, die die Endabschnitte miteinander verbinden, hat es sich im Hinblick auf die Vermeidung von Rissen im Bereich des Übergangs der Stege zu den Endabschnitten und zur optimierten Aussteifung der Stege als besonders vorteilhaft herausgestellt, wenn der eine der Längsabschnitte in den einen Steg, der andere Längsabschnitt in den anderen Steg des Mittelabschnitts und die beiden Schmalabschnitte der schlaufenförmigen Bewehrung jeweils den zugeordneten Randbereich der Endabschnitte eingebettet sind.

Eine als in sich geschlossene Schlaufe ausgebildete Bewehrung lässt sich somit nicht nur bei der Herstellung besonders einfach in der Schwelle positionieren, sondern erlaubt auch eine besonders einfache und gleichzeitig wirksame Anbindung der Endabschnitte an die Stege.

Die erfindungsgemäß vorgesehene Bewehrung kann aus einem massiven Material, wie beispielsweise aus einem zu einem Stab, einem Band oder desgleichen geformten Metallwerkstoff, insbesondere einem Stahlwerkstoff, bestehen. Die Bewehrung kann dabei im Zuge ihrer Herstellung unmittelbar die jeweilige Formgebung, insbesondere ihre geschlossene Schlaufenform, erhalten, oder aus einem vorgefertigten Halbzeug, wie einem Stab- oder Bandmaterial geformt, insbesondere gebogen, werden.

Alternativ zu oder in Kombination mit einer massiven Ausführung kann die erfindungsgemäß vorgesehene Bewehrung auch als Bündel oder Strang einer Vielzahl einzelner Fasern gebildet sein. Als Bewehrung kommen somit beispielsweise massive Stäbe, die beispielsweise aus Stahl oder einem anderen geeigneten Metallwerkstoff bestehen, genauso in Frage wie Faserstränge oder -bündel, die aus ausreichend festen Fasern bestehen, wobei diese Fasern beispielsweise Stahlfasern, Hochleistungsfasern, wie Glasfasern oder Aramidfasern, oder andere technische Textilfasern mit ausreichender Festigkeit sein können. Die Befestigung der Schiene auf einer erfindungsgemäßen Schwelle kann dadurch vereinfacht werden, dass in die Schwelle Teile des jeweils für die Befestigung vorgesehenen Schienenbefestigungssystems integriert sind. Hierzu können beispielsweise im Bereich der auf den Endabschnitten vorgesehenen Aufstandflächen aus dem Kunststoffmaterial der Schwelle Formelemente, wie Vorsprünge, Erhebungen, Gleitflächen, Ausnehmungen, Vertiefungen und desgleichen, zum seitlichen Führen oder Abstützen der auf dem jeweiligen Endabschnitt zu befestigenden Schiene oder zum Führen, Befestigen oder Abstützen eines oder mehrerer Bauelemente eines zum Befestigen der Schiene vorgesehenen Schienenbefestigungssystems ausgebildet sein. Bei den zum Führen der Schiene vorgesehenen Formelementen kann es sich beispielsweise um seitliche Begrenzungen handeln, die die auf dem jeweiligen Endabschnitt vorgesehene Aufstandfläche begrenzen und nach dem Aufsetzen der Schiene auf die Aufstandfläche den Schienenfuß seitlich führen und abstützen. Diese seitlichen Begrenzungen wirken dann nach Art einer konventionellen Führungsplatte und leiten die im Gebrauch auftretenden Querkräfte in die Schwelle ab. Um eine einfache Anpassung des Sitzes der Schiene auf der jeweiligen Aufstandfläche an die vorgeschriebene Spurbreite zu ermöglichen, können in an sich bekannter Weise leistenartige Spurplättchen zwischen den seitlichen Begrenzungen und dem Schienenfuß angeordnet werden. Auch kann in oder an die Endabschnitte jeweils ein Gewinde, ein Dübel oder ein anderes Gegenlager für ein Spannelement, wie eine Schwellenschraube oder ein Schwellenschraubbolzen ein- oder angeformt sein. Ein derartiges Spannelement wird üblicherweise benötigt, um ein Federelement auf der Schwelle zu verspannen, das bei fertig montierter Schiene die zum Niederhalten auf der Schwelle benötigte federnd elastische Niederhaltekraft auf den Schienenfuß ausübt. Die betreffenden zum Führen oder Montieren der Bauteile des jeweiligen Schienenbefestigungssystems vorgesehenen Formelemente lassen sich hierbei problemlos so ausbilden, dass die Bauteile des Schienenbefestigungssystems entfernt zum Gebrauchsort der Schwelle, beispielsweise im Schwellenwerk, bereits so vormontiert werden können, dass am Gebrauchsort nur noch wenige, möglichst automatisch auszuführende Montagetätigkeiten erforderlich sind.

Zur Verbesserung der Dauerhaltbarkeit auch unter ungünstigen Witterungsbedingungen, wie beispielsweise in Bereichen mit großer Staubentwicklung oder großem Sandaufkommen, kann es darüber hinaus zweckmäßig sein, wenn im Bereich der auf den Endabschnitten vorgesehenen Aufstandflächen in das Kunststoffmaterial der Schwelle eine Stützplatte, die beispielsweise aus einem höherfesten oder besonders verschleißbeständigen Material, wie beispielsweise einem geeigneten Stahlwerkstoff, einem geeigneten Eisengusswerkstoff oder einem hochfesten und hochbeständigen Kunststoff besteht, eingelassen ist, über die im Gebrauch die auf dem jeweiligen Endabschnitt der Schwelle abgestützte Schiene großflächig auf dem betreffenden Endabschnitt abgestützt ist. Die Stützplatte kann dabei so ausgebildet sein, dass sie die Verwendung von in der Praxis bewährten Befestigungssystemen erlaubt, die auf einer derartigen Platte basieren. Dies erweist sich insbesondere dann als sinnvoll, wenn eine erfindungsgemäße Schwelle eine im praktischen Einsatz verschlissene Schwelle ersetzen soll, jedoch Teile des schon vorhandenen Befestigungssystems oder die zur Montage dieser Systeme vorhandenen Maschinen weiterbenutzt werden sollen. Über eine in sie integrierte Stützplatte kann eine erfindungsgemäße Schwelle problemlos an derartige Vorgaben angepasst werden.

Eine weitere für die praktische Nutzung wichtige Ausgestaltung der Erfindung ist dadurch gekennzeichnet, dass an der Unterseite einer erfindungsgemäßen Schwelle mindestens ein Formelement ausgebildet ist, das bei auf den Untergrund aufgesetzter Schwelle mit einem an dem Untergrund vorhandenen Formelement formschlüssig zusammenwirkt. Bei diesem an der Unterseite der Schwelle vorgesehenen Formelement kann es sich um einen Vorsprung oder eine Ausnehmung handeln, die mit korrespondierenden, an dem Untergrund vorhandenen Ausnehmungen oder Vorsprüngen zusammenwirken. Beispielsweise können die an der Unterseite vorgesehenen Formelemente so ausgebildet sein, dass einzelne Schottersteine formschlüssig mit ihnen zusammenwirken, indem sie in eine als Formelement vorgesehene Ausnehmung greifen oder indem ein an der Unterseite der Schwelle vorgesehener Vorsprung in eine entsprechende Höhlung, einen Freiraum und desgleichen im Schotterbett vorsteht. Durch die so vorgesehenen Formelemente lässt sich die Schwelle somit zusätzlich gegen eine Verschiebung in ihrer Längsrichtung, d.h. quer zu den auf ihr abgestützten Schienen, sichern.

Die an der Unterseite einer erfindungsgemäßen Schwelle vorgesehenen Formelemente können auch zum platzsparenden sicheren Transport und zur ebenso platzsparenden sicheren Bevorratung von erfindungsgemäßen Schwellen beitragen. So können die betreffenden Formelemente insbesondere auch so angepasst sein, dass sie im Fall, dass eine erfindungsgemäße Schwelle auf einer anderen aufgestapelt wird, durch Formschluss sicherstellen, dass die im Stapel aufeinander sitzenden Schwellen nur durch Abheben entgegen der Schwerkraftrichtung voneinander getrennt werden können. Dabei können beispielsweise an der Unterseite der Schwellen Ausnehmungen vorgesehen sein, in die auf der jeweils unter der betreffenden Schwelle vormontierte Bauelemente eines Schienenbefestigungssystems frei hineinragen können. Ein Kontakt zwischen den vormontierten Bauteilen der einen Schwelle und der auf diese Schwelle aufgesetzten anderen Schwelle kann so sicher vermieden werden.

Die Möglichkeit einer sicheren Stapelbildung kann zusätzlich dadurch unterstützt werden, dass an ihrer Oberseite mindestens optional eine erste Ausrichthilfe ausgebildet ist, der an der Unterseite der Schwelle eine zweite Ausrichthilfe zugeordnet ist, und dass die Ausrichthilfen der Schwelle derart angeordnet sind, dass im Fall, dass eine in gleicher Weise mindestens an ihrer Unterseite mit Ausrichthilfen versehene Schwelle zur Bildung eines Schwellenstapels auf die Schwelle gesetzt wird, die an der Oberseite der einen Schwelle vorgesehene Ausrichthilfe mit der zweiten Ausrichthilfe zusammenwirkt, die an der Unterseite der auf die Schwelle gesetzten anderen Schwelle vorhanden ist, und so die Schwellen gegeneinander in einer parallel zur Unterseite der Schwellen ausgerichteten Ebene unverschiebbar festlegt.

Nachfolgend wird die Erfindung anhand einer Ausführungsbeispiele zeigenden Zeichnung näher erläutert. Deren Figuren zeigen jeweils schematisch:
- Fig. 1: eine erste Schwelle in einer perspektivischen Ansicht von oben;

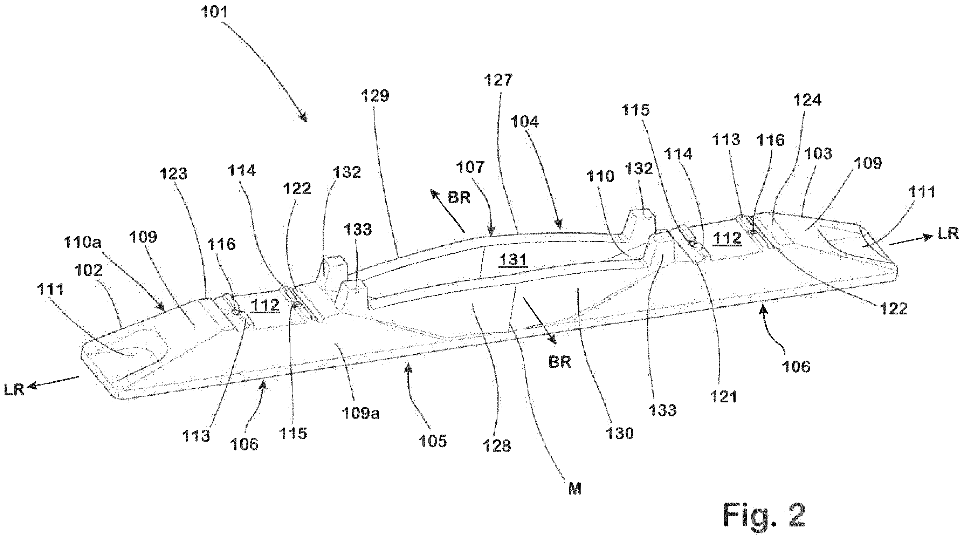

- Fig. 2: eine zweite Schwelle in einer perspektivischen Ansicht von oben;
- Fig. 3: die Schwelle gemäß Fig. 2 in einem Längsschnitt;
- Fig. 4: die Schwelle gemäß Fig. 2 in einer Ansicht von unten;
- Fig. 5: die Schwelle gemäß Fig. 2 in einem Schnitt entlang der in Fig. 3 eingezeichneten Schnittlinie X-X;
- Fig. 6: die Schwelle gemäß Fig. 2 in einem Schnitt entlang der in Fig. 4 eingezeichneten Schnittlinie Y-Y;
- Fig. 7: eine dritte Ausgestaltung einer Schwelle in einer perspektivischen Ansicht;
- Fig. 8: einen Stapel von Schwellen in perspektivischer Ansicht von oben;
- Fig. 9: einen Stapel von Schwellen in seitlicher Ansicht.

Die in den Figuren gezeigten Schwellen 1;101 für den Gleisoberbau weisen jeweils eine langgestreckte Grundform mit einer quer zur Längserstreckung LR der auf den Schwellen 1 ;101 montierten Schienen S1,S2 gemessenen Länge L auf, die wesentlich größer ist als ihre in Breitenrichtung BR quer zur Länge L gemessenen Breite B und der senkrecht dazu gemessenen Höhe H.

Die Schwellen 1;101 umfassen jeweils zwei Endabschnitte 2,3;102,103 und einen zwischen den Endabschnitten 2,3;102,103 angeordneten Mittelabschnitt 4;104.

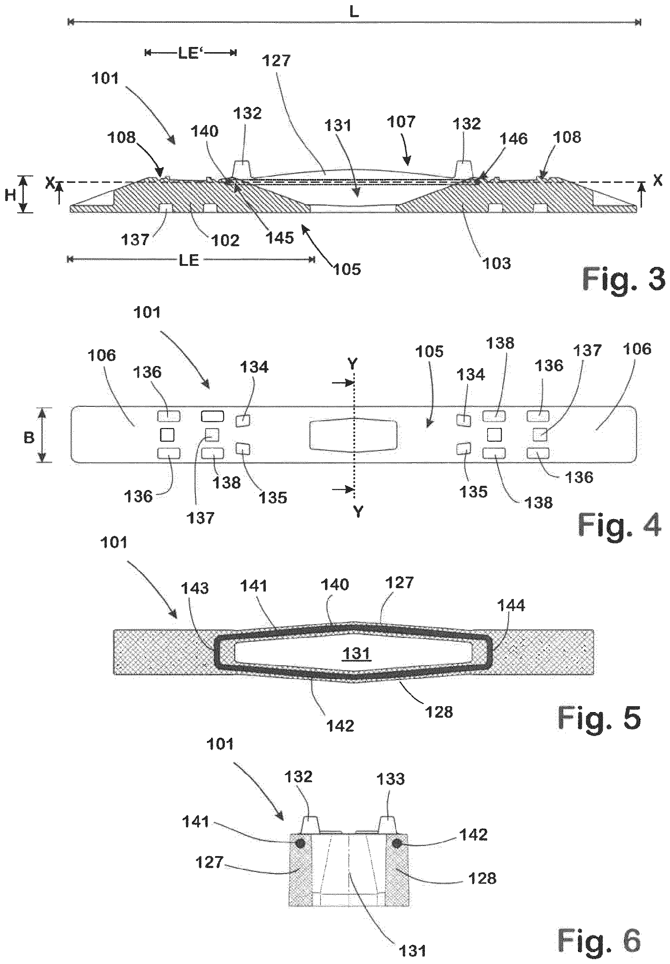

Die Endabschnitte 2,3; 102,103 weisen, im Längsschnitt (Fig. 3) betrachtet, jeweils eine trapezförmige Querschnittsform auf, bei der die Länge LE der der Unterseite 5;105 der Schwelle 1;101 zugeordneten, ebenen und rechteckigen Grundfläche 6;106 größer ist als die Länge LE' der der Oberseite 7;107 der Schwelle 1;101 zugeordneten Deckfläche 108 der Endabschnitte 2,3;102,103. Die Schmalseiten 9,10;109,110 der Endabschnitte 2,3;102,103 steigen dementsprechend ausgehend von den schmalen Seiten der Grundfläche 6;106 in Richtung der Deckfläche 108 der Schwellen 1;101 an und schließen mit der Grundfläche 6;106 einen spitzen Winkel ein.

Die Längsaußenseiten 9a,10a;109a,110a der Endabschnitte 2,3;102,103 sind ebenfalls ausgehend von der Grundfläche 6;106 der Endabschnitte 2,3;102,103 in Richtung der Deckfläche 108 schräg ausgerichtet, jedoch weniger stark geneigt als die Schmalseiten 9,10;109,110. Die Breite BE' der in ihrer Grundform rechteckigen Deckfläche 8,108 der Endabschnitte 2,3;102,103 ist daher ebenfalls geringer als die mit der Breite B der Schwelle 1;101 übereinstimmenden Breite der Grundfläche 6;106.

In die jeweils vom Mittelabschnitt 4;104 abgewandte, außen liegende Schmalseite 9;109 der Endabschnitte 2,3;102,103 ist jeweils eine Ausnehmung 11;111 eingeformt. Durch das im Bereich dieser Ausnehmungen 11;111 fehlende Material ist einerseits Gewicht eingespart. Andererseits drängen bei einer Montage der Schwelle 1;101 auf einem hier der Übersichtlichkeit halber nicht gezeigten, konventionell ausgebildeten Schotterbett Schottersteine in die Ausnehmung 11;111, wodurch die Verklammerung der Schwelle 1;101 mit dem Schotterbett verbessert und einem Verschieben der Schwelle 1;101 quer zur Längsrichtung LR der Schienen S1,S2 entgegengewirkt wird.

In die Deckfläche 108 der Endabschnitte 2;3;102;103 der Schwelle 1;101 ist jeweils eine sich über die Breite B der Schwelle 1;101 erstreckende, ebene Aufstandfläche 112 eingeformt, auf der im Gebrauch der Fuß F1,F2 der jeweiligen Schiene S1,S2 steht. Gegebenenfalls können dabei zwischen dem Fuß F1,F2 und der Aufstandfläche 112 ein Plattenelement oder mehrere Plattenelemente angeordnet sein, die hier nicht sichtbar sind. Die Plattenelemente können beispielsweise aus einem elastischen Material oder einem festen Material bestehen, um bei Verwendung eines elastischen Materials der Abstützung der Schiene S1,S2 eine bestimmte Nachgiebigkeit in Schwerkraftrichtung zu verleihen oder bei Verwendung eines festen Materials die auf der Aufstandfläche lastenden Kräfte gleichmäßig zu verteilen. Selbstverständlich können elastische und feste Platten in Kombination eingesetzt werden, um die jeweils gewünschte Eigenschafts- oder Funktionskombination zu erzielen.

Zusätzlich sind an oder in die Deckfläche 108 weitere Formelemente eingeformt, die zum Führen der jeweiligen Schiene S1,S2 oder der zu ihrer Befestigung auf der Schwelle 1;101 vorgesehenen Bauteile dienen.

So ist die Aufstandfläche 112 an ihren sich über die Breite B erstreckenden Rändern durch Rippen 13,14;113,114 begrenzt. Die Rippen 13,14;113,114 dienen zum seitlichen Führen des Schienenfußes F1,F2 der jeweiligen Schiene S1,S2.

Die Rippen 13,14;113,114 sind durch jeweils eine zylindrische, beispielsweise in Form einer Bohrung eingebrachte Einsenkung 115,116 mittig geteilt. In die Einsenkung 115,116 wird bei der Befestigung der Schiene S1,S2 jeweils eine Schwellenschraube 17,18 mit ihrem Gewindeschaft eingeschraubt. Das am Gewindeschaft der Schwellenschrauben 17,18 vorgesehene Gewinde kann dabei so ausgebildet sein, dass es sich beim Einschrauben in das die Einsenkung 115,116 umgrenzende Material schneidet.

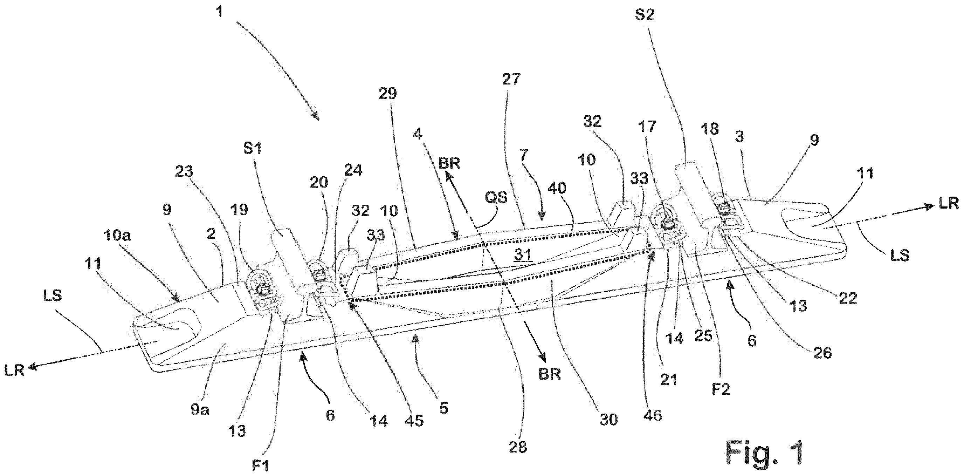

Die Schwellenschrauben 17,18 dienen zum Verspannen jeweils einer konventionell ausgebildeten, W-förmigen Spannklemme 19,20, die bei fertig montierten Schienen S1,S2 mit den freien Enden ihrer Haltearme auf den Schienenfuß F1,F2 eine elastische Niederhaltekraft ausübt. Dazu sind die Schwellenschrauben 17,18 mit ihrem Gewindeschaft durch die Mittelschlaufe der jeweiligen Spannklemme 19,20 geführt, so dass ihr Schraubenkopf die Mittelschlaufe in Richtung der Deckfläche 6,106 des jeweiligen Endabschnitts 2,3;102,103 drückt. Die zwischen den Haltearmen und der Mittelschlaufe jeweils angeordneten Torsionsabschnitte der Spannklemmen 19,20 sitzen dabei jeweils in einer als weiteres Formelement in die Deckfläche 106 eingeformten Kehle 21,22;121,122, die auf der von der Aufstandfläche 112 abgewandten Seite der Rippen 13,14;113,114 parallel zu diesen verläuft und sich dabei ebenfalls über die Breite B der Schwelle 1;101 erstreckt. Auf der von der von den Rippen 13,14;113,114 abgewandten Seite der Kehlen 21,22;121,122 ist zusätzlich jeweils eine in Richtung der jeweiligen Kehle 21,22;121,122 schräg abfallende Fläche 23,24;123,124 vorgesehen. Auf dieser Fläche sitzen die Spannklemmen 19,20 mit ihren Torsionsabschnitten, wenn sie sich in einer gegenüber der fertigen Montagestellung in Längsrichtung LR der Schwelle 1;101 versetzten Vormontageposition befinden, in der die Endabschnitte der Haltearme der Spannklemmen 19,20 sich außerhalb der Aufstandflächen 112 befinden, so dass die jeweilige Schiene S1,S2 mit ihrem Schienenfuß F1,F2 ungehindert auf die Aufstandfläche 112 gesetzt werden kann. Anschließend werden die Spannklemmen 19,20 dann in Richtung der jeweiligen Schiene S1,S2 verschoben, bis die Haltearme auf dem Schienenfuß F1,F2 lasten und die Torsionsabschnitte der Spannklemmen 19,20 in der zugeordneten Kehle 21,22;121,122 sitzen. Die fertige Montageposition ist in Fig. 1 für die Spannklemmen 19 gezeigt, wogegen sich die Spannklemmen 20 jeweils in der Vormontageposition befinden.

Beispiele für die Spannklemmen 19,20 und ihre Funktion sind in großer Zahl aus der Praxis bekannt und beispielsweise in der DE 10 2004 033 723 B4 oder der WO 2012/059374 A1 und den in diesen beiden Patentveröffentlichungen genannten weiteren Publikationen beschrieben.

Die exakte Einstellung der Position der Schiene S1,S2 auf der ihr jeweils zugeordneten Aufstandfläche 112 der Endabschnitte 2,3;102,103 kann durch austauschbare leistenartige Spurplättchen 25,26 eingestellt werden, die jeweils zwischen den Rippen 13,14;113,114 und dem seitlichen Rand des Fußes F1,F2 der jeweiligen Schiene S1,S2 angeordnet werden. Die Dicke der austauschbaren Spurplättchen 25,26 wird dabei entsprechend der lichten Weite des sich zwischen der jeweiligen Rippe 13,14;113,114 und dem Rand des Schienenfuß F1,F2 bei in Sollposition befindlicher Schiene S1,S2 gegebenenfalls ergebenden Spalts ausgewählt, so dass das jeweilige Spurplättchen 25,26 spielfrei zwischen dem Schienenfuß F1,F2 und der jeweils zugeordneten Rippe 13,14;113,114 sitzt.

Der die Endabschnitte 2,3;102,103 verbindende und auf Abstand haltende Mittelabschnitt 4,104 der Schwellen 1;101 ist durch zwei Stege 27,28;127,128 gebildet. Die Stege 27,28;127,128 sind spiegelsymmetrisch in Bezug zur Längsachse LS und in Bezug zur Querachse QS der Schwellen 1;101 geformt. Sie weisen jeweils einen ersten Stegabschnitt 29;129 auf. Der Stegabschnitt 29;129 des einen Stegs 27;127 ist dabei mit seinem einen Ende derart an den einen Endabschnitt 2;102 angeschlossen, dass er im der einen Längsaußenseite 9a;109a dieses Endabschnitts 2;102 und dem Mittelabschnitt 4;104 zugeordneten Eckbereich der Deckfläche 108 an den Endabschnitt 2;102 angeschlossen ist. Genauso ist der Stegabschnitt 29;129 des anderen Stegs 28;128 mit seinem einen Ende derart an den einen Endabschnitt 2;102 angeschlossen, dass er im der einen Längsaußenseite 10a;110a dieses Endabschnitts 2;102 und dem Mittelabschnitt 4;104 zugeordneten Eckbereich der Deckfläche 108 an den Endabschnitt 2;102 angeschlossen ist. Ausgehend vom Endabschnitt 2;102 laufen die Stege 27,28;127,128 dann leicht nach außen gerichtet bis zur Mitte M der Länge L der Schwelle 1;101. Die schräge Ausrichtung der Stegabschnitte 29;129 ist dabei so bemessen, dass der Abstand der Längsaußenseiten der Stegabschnitte 29;129 der Stege 27,28;127,128 an ihrem der Mitte M zugeordneten Ende der Breite B der Schwelle 1;101 entspricht. An das der Mitte M zugeordnete Ende der Stegabschnitte 29;129 ist jeweils ein zweiter Stegabschnitt 30;130 der Stege 27,28;127,128 angeschlossen. Dieser zweite Stegabschnitt 30;130 verläuft jeweils leicht schräg ausgerichtet in Richtung des zweiten Endabschnitts 3;103 und ist mit seinem diesem Endabschnitt 3;103 zugeordneten Ende in der gleichen Weise angeschlossen, wie der jeweils erste Stegabschnitt 29;129 der Stege 27,28;127,128 an den ersten Endabschnitt 2;102.

Die Stege 27,28;127,128 umgrenzen auf diese Weise zwischen sich eine sich ausgehend von den Endabschnitten 2,3;102,103 in Richtung der Mitte M erweiternde Kammer 31;131, die zur Unterseite 5;105 und zur Oberseite der Schwelle 1;101 hin offen ist. Auf diese Weise können beispielsweise im Fall, dass die Schwelle 1;101 auf ein Schotterbett aufgesetzt wird, Schottersteine in die Kammer 31;131 eindringen und auf diese Weise die Verklammerung der Schwelle 1;101 mit dem Untergrund verbessern. Ebenso ist in diesem Fall dadurch, dass die Kammer 31;131 zur Unterseite 5;105 der Schwelle 1;101 offen ist, die Kontaktfläche zwischen dem Schotterbett und der Schwelle 1;101 minimiert, so dass die Schwelle insbesondere im Bereich ihres Mittelabschnitts 4;104 unter der Last eines Schienenfahrzeugs stärker in das Schotterbett einsinken kann als bei einer Schwelle mit vollständig geschlossener Unterseite.

Die Biegesteifigkeit der Stege 27,28;127,128 ist dadurch zusätzlich verbessert, dass ihre Höhe jeweils ausgehend von ihrem den Endabschnitten 2,3;102,103 zugeordneten Enden kontinuierlich bis zur Mitte M zunimmt. Die Stege 27,28;127,128 weisen so im Bereich ihrer Oberseite einen bogenförmigen Verlauf auf, der dem bei Belastung durch das Gewicht eines Schienenfahrzeug in den Stegen 27,28;127,128 auftretenden Spannungsverlauf folgt.

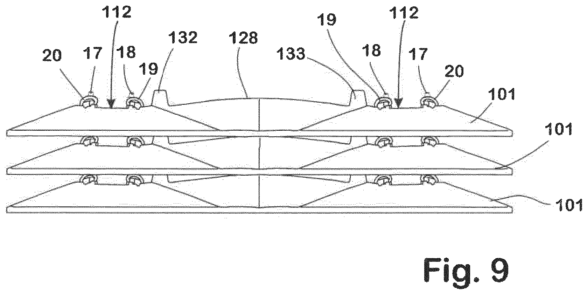

Bei der Schwelle 101 ist auf die an die Endabschnitte 102,103 angrenzenden Endbereiche der Stege 127,128 jeweils eine nach Art eines nach oben vorstehenden Höckers geformte Ausrichthilfe 132,133 ausgebildet. Diesen Ausrichthilfen 132,133 ist an der Unterseite 105 der Schwelle 101 jeweils eine zweite Ausrichthilfe 134,135 in Form einer in die Unterseite 105 eingeformten Einsenkung zugeordnet ist, deren Form so an die Form der ersten Ausrichthilfen 132,133 angepasst ist, dass bei zwei aufeinander gestapelten Schwellen 101 die an der Oberseite 107 vorhandene erste Ausrichthilfe 132,133 der jeweils zuunterst angeordneten Schwelle 101 formschlüssig in die zweite Ausrichthilfe 134,135 greift, die in die Unterseite 105 der auf ihr sitzenden zweiten Schwelle 101 eingeformt ist. Auf diese Weise sind die aufeinander gestapelten gleichartigen Schwellen 101 (Fig. 9,10) gegeneinander in einer parallel zur Unterseite der Schwellen 101 ausgerichteten Ebene unverschiebbar festlegt. Gleichzeitig ist die Höhe der ersten Ausrichthilfen 132,133 so an die Tiefe der zweiten Ausrichthilfen 134,135 angepasst, dass die aufeinander sitzenden Schwellen 101 in einem definierten Abstand gehalten sind.

Zusätzlich zu den zweiten Ausrichthilfen 134,135 sind im Bereich der Grundflächen 6;106 der Endabschnitte 2,3;102,103 in die Unterseite 5;105 der Schwellen 1;101 weitere Ausnehmungen 136,137,138 eingeformt. Diese Ausnehmungen 136,137,138 sind dabei so positioniert und geformt, dass im Fall, dass auf den Schwellen 1;101 die zum Befestigen der Schienen S1,S2 vorgesehenen Bauteile (Spannklemmen 19,20; Schwellenschrauben 17,18) auf der Deckfläche 108 vormontiert sind und entsprechend bestückte Schwellen 101 zu einem Stapel gestapelt werden sollen (Fig. 10), die betreffenden Bauteile frei in die zugeordneten Ausnehmungen 136,137,138 ragen und ein Kontakt zwischen ihnen und der über ihr sitzenden Schwelle 1;101 vermieden wird. Im Fall, dass die Schwellen 1;101 auf ein Schotterbett aufgesetzt werden, dienen die Ausnehmungen 136,137,138 sowie die zweiten Ausrichthilfen 134,135 als weitere Verklammerungspunkte, in die die Schottersteine ragen und so eine Verschiebung der Schwelle 1;101 auf dem Schotterbett zusätzlich behindern.

Um die Biegesteifigkeit der Stege 27,28;127,128 zu maximieren und ihre dauerfeste Anbindung an die Endabschnitte 2,3;102,103 zu optimieren, ist in die Schwellen 1;101 jeweils eine Bewehrung 40;140 eingelegt, die hier der Übersichtlichkeit halber nur für die Schwelle 101 dargestellt ist.

Die jeweils vollständig in das Kunststoff-Sand-Material der Schwellen 1;101 eingebettete Bewehrung 40;140 besteht aus einem hochfesten Material, wie beispielsweise einem Strang aus hochfesten Fasern oder einem Stahlstab.

Die Bewehrung 40;140 der Schwellen 1;101 verläuft jeweils in den Stegen 27,28;127,128 und den Endabschnitten 2,3;102,103 und ist im oberen Viertel der Höhe H der Schwelle 1;101 positioniert. Dabei ist die Bewehrung 40;140 derart zu einer geschlossenen, O-förmigen Schlaufe geformt, dass ihre Längsabschnitte 141,142 dem Verlauf der Stegabschnitte 29,30;129,130 folgend sich jeweils von dem einen Endabschnitt 2;102 zum anderen Endabschnitt 3;103 erstrecken und die die Längsabschnitte 141,142 verbindenden kurzen Abschnitte 143,144 der Bewehrung 40;140 in einem der Kammer 31 zugeordneten, im an die Deckfläche 8,108 angrenzenden oberen Abschnitt der Schmalseiten 10;110 angeordneten Randbereich 45,46;145,146 der Endabschnitte 2,3;102,103 verankert sind.

Die Schwellen 1, 101 sind jeweils in einem Stück aus einem Kunststoff-Sand-Gemisch gemäß dem Verfahren hergestellt worden, das in der oben bereits erwähnten und in die vorliegende Anmeldung einbezogenen PCT/EP2016/059064 bereits beschrieben ist.

Dementsprechend ist für die Herstellung der Schwellen 1,101 ein Quarzsand bereitgestellt worden, dessen Schüttdichte ca. 1,9 g/cm³ bei einer nach Mohs (s. beispielsweise Detlef Gysau, "Füllstoffe", 3. Auflage, Hannover: Vincentz Network, 2014, ISBN: 9783866308398) bestimmten Härte von 7 und einem mittleren Korndurchmesser der Sandkörner von 0,1-0,5 mm betrug.

Genauso wurde ein Kunststoff-Granulat bereitgestellt, das aus einer Mischung von Polypropylen-Kunststoffkörnern (PP-Granulat) bestand. Der bei 230°C und einer Last von 2,16 kg ermittelte Melt Flow Index des PP-Kunststoff-Granulats betrug mehr als 20.

Vor dem Mischen mit dem Kunststoff-Granulat ist der Sand mit Hilfe einer in ihn eingetauchten, mittels eines erwärmten Öls beheizten Heizpatrone auf 220 °C erwärmt worden. Die Temperatur des Kunststoff-Granulats entsprach dagegen der Raumtemperatur.

Der heiße Sand ist dann in einem Extruder mit dem Kunststoff-Granulat vermischt worden. Die Dosierung von Sand und Kunststoff-Granulat erfolgte dabei derart, dass das erhaltene Sand-Kunststoff-Gemisch zu 35 Masse-% aus Kunststoff-Granulat und als Rest aus Sand bestand. Im Zuge der Mischung ist das Kunststoff-Granulat erhitzt und der heiße Sand in entsprechender Weise abgekühlt worden, so dass das erhaltene Sand-Kunststoff-Gemisch eine Presstemperatur von 170 °C aufwies. Bei dieser Temperatur war das Kunststoff-Granulat bereits vollständig aufgeschmolzen.

Das so temperierte Sand-Kunststoff-Gemisch ist in eine Form eines die jeweilige Schwelle 1,101 abbildenden, hier nicht dargestellten Presswerkzeugs gefüllt worden, deren Temperatur bei mindestens 120 °C gehalten worden ist. In das Presswerkzeug ist zuvor die Bewehrung 40;140 entsprechend ihrer in der fertigen Schwelle 1;101 vorgesehenen Position angeordnet worden.

Dann ist das Sand-Kunststoff-Gemisch in der Form über eine Dauer von beispielsweise 30 Minuten unter einem Druck von 3,6 MPa gehalten worden. Auf diese Weise wurde die Form gleichmäßig mit dem Sand-Kunststoff-Gemisch gefüllt, so dass die durch die Form vorgegebenen Details der Schwelle 1;101 einwandfrei abgebildet wurden und eine intensive Anbindung des Sands an den ihn umgebenden Kunststoff eintrat.

Nach Ende der Presszeit ist die Form geöffnet und die erhaltene Schwelle 1;101 auf eine Entformtemperatur von 60 °C abgekühlt worden, bei der schließlich die Schwelle 1;101 aus der Form entformt wurde.

Die erhaltene Schwelle 1;101 wies eine so hohe Bruchsicherheit auf, dass sie die im praktischen Einsatz auftretenden Belastungen dauerhaft sicher aufnehmen konnte.

Dabei erwies sich, dass die Ausziehwiderstände, d.h. die Kräfte, die notwendig sind, um die Verankerung (Schwellenschrauben 17,18) einer Schienenbefestigung aus der Schwelle 1;101 herauszuziehen, deutlich größer sind als der hierfür in der Praxis vorgeschriebene Mindestwert.

Ebenso wurden bei Versuchen mit konventionellen Schwellenschrauben 17,18 Anzugsmomente erreicht, die oberhalb von 60 kN lagen, beispielsweise 70 kN und mehr betrugen.

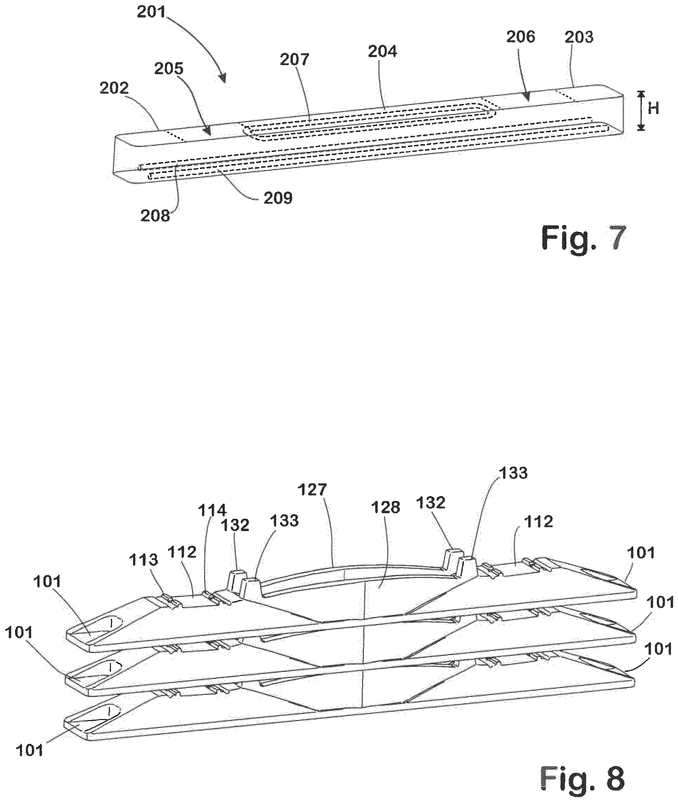

Die in Fig. 7 dargestellte Schwelle 201 ist in derselben Weise wie die Schwellen 1,101 hergestellt, weist jedoch eine gegenüber den Schwellen 1,101 vereinfachte, im Wesentlichen rein quaderförmige Gestalt mit zwei Endabschnitten 202,203 und einem zwischen den Endabschnitten 202,203 angeordneten Mittelabschnitt 204 auf. Auf der Oberseite der Endabschnitte 202,203 ist jeweils eine Aufstandfläche 205,206 für die beiden auf der Schwelle 201 zu montierenden, hier nicht gezeigten Schienen ausgebildet.

Im oberen Viertel der Höhe H der Schwelle 201 ist auch in die Schwelle 201 eine nach Art einer rechteckig ausgelegten, endlosen, also geschlossenen, Schlaufe geformte Bewehrung 207 eingelegt. Die Bewehrung 207 ist mit ihren kurzen Seiten jeweils in dem Randbereich der Endabschnitte 202,203 verankert, mit dem der betreffende Endabschnitt 202,203 jeweils an den Mittelabschnitt 204 der Schwelle 201 angeschlossen ist.

Des Weiteren sind in die Schwelle 201 zusätzliche Bewehrungen 208,209 in Form von massiven, aus einem Stabmaterial bestehenden Bewehrungsstäben oder aus Hochleistungsfasern bestehenden Bewehrungssträngen eingelegt. Die zusätzlichen Bewehrungen 208,209 sind im unteren Viertel der Höhe H der Schwelle 201 parallel und beanstandet zueinander so angeordnet, dass sie jeweils nahe der jeweils zugeordneten Längsseite der Schwelle 201 in das Material der Schwelle 201 eingebettet sind. Dabei erstrecken sich die zusätzlichen Bewehrungen 208,209 über annähernd die gesamte Länge der Schwelle 201 bis über den Bereich der Endabschnitte 202,203 hinaus, auf denen die Aufstandflächen 205,206 für die auf der Schwelle 201 zu befestigenden Schienen ausgebildet sind.

Die zusätzlichen Bewehrungen 208,209 sichern so eine optimale Tragfähigkeit der Schwelle 201 insbesondere auch im Bereich ihrer Endabschnitte 202,203, wogegen die Bewehrung 207 die dauerhafte Anbindung des Mittelabschnitts 204 an die Endabschnitte 202,203 gewährleistet.

### BEZUGSZEICHEN

- 1: Schwelle
- 2,3: Endabschnitte der Schwelle 1
- 4: Mittelabschnitt der Schwelle 1
- 5: Unterseite der Schwelle 1
- 6: Grundfläche der Endabschnitte 2,3
- 7: Oberseite der Schwelle 1
- 9,10: Schmalseiten der Endabschnitte 2,3
- 9a,10a: Längsaußenseiten der Endabschnitte 2,3
- 11: Ausnehmung
- 13,14: Rippen (Formelemente zum Führen des Schienenfußes F1,F2)
- 17,18: Schwelleschrauben
- 19,20: Spannklemmen
- 21,22: Kehle (Formelement zum Führen der Spannklemmen 19,20)
- 23,24: Fläche (Formelement zum Abstützen der Spannklemmen 19,20)
- 25,26: Spurplättchen
- 27,28: Stege
- 29,30: Stegabschnitte der Stege 27,28
- 31: Kammer
- 40: Bewehrung
- 45,46: dem Mittelabschnitt 4 zugeordneter Randbereich der Endabschnitte 2,3
- 101: Schwelle
- 102,103: Endabschnitte der Schwelle 101
- 104: Mittelabschnitt der Schwelle 101
- 105: Unterseite der Schwelle 101
- 106: Grundfläche der Endabschnitte 102,103
- 107: Oberseite der Schwelle 101
- 108: Deckfläche der Endabschnitte 102,103
- 109,110: Schmalseiten der Endabschnitte 102,103
- 109a,110a: Längsaußenseiten der Endabschnitte 102,103
- 111: Ausnehmung
- 112: Aufstandfläche der Endabschnitte 102,103
- 113,114: Rippen (Formelemente zum Führen des Schienenfußes F1,F2)
- 115,116: Einsenkungen (Formelemente zum Halten der Schwelleschrauben)
- 121,122: Kehle (Formelement zum Führen der Spannklemmen 19,20)
- 123,124: Fläche (Formelement zum Abstützen der Spannklemmen 19,20)
- 127,128: Stege
- 129,130: Stegabschnitte der Stege 127,128
- 131: Kammer
- 132,133: erste Ausrichthilfen (Höcker)
- 134,135: zweite Ausrichthilfen (Einsenkungen)
- 136 - 138: Ausnehmungen
- 140: Bewehrung
- 141,142: Längsabschnitte der Bewehrung
- 143,144: kurze Abschnitte der Bewehrung
- 145,146: dem Mittelabschnitt 104 zugeordneter Randbereich der Endabschnitte 102,103

- 201: Schwelle
- 202,203: Endabschnitte der Schwelle 201
- 204: Mittelabschnitt der Schwelle 201
- 205,206: Aufstandflächen
- 207: Bewehrung
- 208,209: zusätzliche Bewehrungen

- B: Breite der Schwellen 1;101
- BE': Breite der Deckfläche 108
- BR: Breitenrichtung
- F1,F2: Fuß der Schiene S1,S2
- H: Höhe der Schwellen 1;101
- L: Länge der Schwellen 1;101
- LE': Länge der Oberseite 7;107 der Deckfläche 108
- LE: Länge der Grundfläche 6;106
- LR: Längserstreckung/Längsrichtung der Schienen S1,S2
- LS: Längsachse der Schwellen 1;101
- M: Mitte der Länge L der Schwellen 1;101
- QS: Querachse der Schwellen 1;101
- S1,S2: Schienen

## Patentansprüche

1. Schwelle für den Gleisoberbau, die in einem Stück aus einem Kunststoffmaterial hergestellt ist, wobei die Schwelle (1;101) eine langgestreckte Grundform mit zwei Endabschnitten (2,3;102,103) aufweist, die durch einen Mittelabschnitt (4;104) der Schwelle (1;101) verbunden und auf Abstand gehalten sind und an deren Oberseite (7;107) jeweils eine Aufstandfläche (112) für jeweils eine auf dem jeweiligen Endabschnitt (2,3;102,103) abzustützende Schiene (S1,S2) vorgesehen ist, wobei in den Mittelabschnitt (4,104) eine sich in Längsrichtung (LR) der Schwelle (1;101) erstreckende Bewehrung (40;140) eingebettet ist, wobei sich die Bewehrung (40;140) über die Länge des Mittelabschnitts (4;104) erstreckt, wobei die Bewehrung (40;140) jeweils in einem dem Mittelabschnitt (4;104) zugeordneten Randbereich (45,46;145,146) der Endabschnitte (2,3;102,103) in dem jeweiligen Endabschnitt (2,3;102,103) verankert ist und wobei die Bewehrung (40;140) ganz oder teilweise im oberen Viertel der Höhe (H) der Schwelle (1;101) angeordnet ist, **dadurch gekennzeichnet, dass** die Bewehrung (40;140) nach Art einer endlosen Schlaufe mit zwei Längsabschnitten (141,142) und zwei Schmalabschnitten (143,144) geformt ist, von denen sich jeweils einer der Schmalabschnitte (143, 144) zwischen den einander zugeordneten Enden der Längsabschnitte (141,142) erstreckt und in einem der dem Mittelabschnitt (4; 104) zugeordneten Randbereiche (45,46;145,146) der Endabschnitte (2,3;102,103) verankert ist.

2. Schwelle nach Anspruch 1, **dadurch gekennzeichnet, dass** die Bewehrung (40) sich jeweils mindestens bis in denjenigen Bereich der Endabschnitte (2,3;102,103) hinein erstreckt, auf dem die Aufstandfläche (112) für die abzustützende Schiene (S1,S2) ausgebildet ist.

3. Schwelle nach einem der voranstehenden Ansprüche, **dadurch gekennzeichnet, dass** die Bewehrung (40;140) ausschließlich im oberen Viertel der Höhe (H) der Schwelle (1;101) angeordnet ist.

4. Schwelle nach einem der voranstehenden Ansprüche, **dadurch gekennzeichnet, dass** der Mittelabschnitt (4;104) durch mindestens einen den Abstand zwischen den Endabschnitten (2,3;102,103) frei überbrückenden Steg (27,28;127,128) gebildet ist, dessen in quer zur Längserstreckung (LR) der Schwelle (1;101) ausgerichteter Breitenrichtung (BR) gemessene Breite (B) kleiner ist als die ebenfalls in Breitenrichtung (BR) gemessene Breite (B) der Endabschnitte (2,3;102,103), und **dass** die Bewehrung in den Steg (27,28;127,128) eingebettet ist.

5. Schwelle nach Anspruch 4, **dadurch gekennzeichnet, dass** die Höhe des Stegs (27,28;127,128) über den Abstand zwischen den Endabschnitten (2,3;102,103) der Schwelle (1;101) variiert ist.

6. Schwelle nach einem der voranstehenden Ansprüche, **dadurch gekennzeichnet, dass** sie in Bezug auf ihre Längsachse (LS) spiegelsymmetrisch geformt ist.

7. Schwelle nach einem der voranstehenden Ansprüche, **dadurch gekennzeichnet, dass** der Mittelabschnitt (4;104) zwei in Breitenrichtung (BR) beabstandet angeordnete Stege (27,28;127,128) umfasst.

8. Schwelle nach Anspruch 7, **dadurch gekennzeichnet, dass** die Stege (27,28;127,128) jeweils einen ausgehend von dem ersten Endabschnitt (2;102) in Breitenrichtung (BR) nach außen verlaufenden ersten Abschnitt (29;129) und einen zweiten Abschnitt (30;130) aufweist, der an das vom ersten Endabschnitt (2;102) abgewandte Ende des ersten Abschnitts (29;129) des jeweiligen Stegs (27,28;127,128) angeschlossen ist und zu dem zweiten Abschnitt (3;103) zurückverläuft.

9. Schwelle nach Anspruch 8, **dadurch gekennzeichnet, dass** der eine der Längsabschnitte (141) in den einen Steg (27;127), der andere Längsabschnitt (142) in den anderen Steg (28;128) des Mittelabschnitts (4;104) und die beiden Schmalabschnitte (143,144) jeweils in den zugeordneten Randbereich (45,46;145,146) der Endabschnitte (2,3;102,103) eingebettet sind.

10. Schwelle nach einem der voranstehenden Ansprüche, **dadurch gekennzeichnet, dass** die Bewehrung (40;140) aus einem massiven Material besteht.

11. Schwelle nach nach einem der voranstehenden Ansprüche, **dadurch gekennzeichnet, dass** die Bewehrung (40;140) aus einem Stabmaterial geformt ist.

12. Schwelle nach einem der Ansprüche 1 bis 8, **dadurch gekennzeichnet, dass** die Bewehrung (40;140) aus einem Fasermaterial besteht.

13. Schwelle nach einem der voranstehenden Ansprüche, **dadurch gekennzeichnet, dass** an ihrer Oberseite (7;107) mindestens eine erste Ausrichthilfe (132,133) ausgebildet ist, der an der Unterseite (5;105) der Schwelle (1;101) eine zweite Ausrichthilfe (134,135) zugeordnet ist, und **dass** die Ausrichthilfen (132 - 135) der Schwelle (1;101) derart angeordnet sind, dass im Fall, dass eine in gleicher Weise mindestens an ihrer Unterseite mit Ausrichthilfen (134,135) versehene Schwelle (1;101) zur Bildung eines Schwellenstapels auf die Schwelle (1;101) gesetzt wird, die an der Oberseite (7;107) der einen Schwelle (1;101) vorgesehene Ausrichthilfe (132,133) mit der an der Unterseite (5;105) der auf diese Schwelle (1;101) gesetzten anderen Schwelle (1;101) vorhandenen zweiten Ausrichthilfe (134,135) zusammenwirkt und die Schwellen (1;101) gegeneinander in einer parallel zur Unterseite (5;105) der Schwellen (1;101) ausgerichteten Ebene unverschiebbar festlegt.

14. Schwelle nach einem der voranstehenden Ansprüche, **dadurch gekennzeichnet, dass** sie aus einem Kunststoff-Sand-Gemisch gefertigt ist, dessen Kunststoffgehalt 10 - 60 Masse-% beträgt und dessen Rest aus Sand mit einem mittleren Korndurchmesser von 0,1 - 0,5 mm besteht.

## Claims

1. Sleeper for the track superstructure, which is manufactured in one piece from a plastic material, wherein the sleeper (1;101) has an elongated base shape with two end sections (2, 3; 102,103), which are connected by a middle section (4; 104) of the sleeper (1; 101) and are held at a distance and at their upper side (7; 107) in each case one contact surface (112) is provided for in each case one rail (S1, S2) to be supported on the respective end section (2, 3; 102, 103), wherein a reinforcement (40; 140) extending in the longitudinal direction (LR) of the sleeper (1; 101) is embedded into the middle section (4, 104), wherein the reinforcement (40; 140) extends over the length of the middle section (4; 104), wherein the reinforcement (40; 140) is in each case anchored in an edge region (45, 46; 145, 146) of the end sections (2, 3; 102, 103) assigned to the middle section (4; 104) in the respective end section (2, 3; 102, 103) and wherein the reinforcement (40; 140) is wholly or partially arranged in the upper quarter of the height (H) of the sleeper (1; 101), **characterised in that** the reinforcement (40; 140) is anchored in the manner of a continuous loop with two longitudinal sections (141, 142) and two narrow sections (143, 144) of which in each case one of the narrow sections (143, 144) extends between the ends of the longitudinal sections (141, 142) assigned to one another and is anchored in one of the edge regions (45, 46; 145, 146) of the end sections (2, 3; 102, 103) assigned to the middle sections (4; 104).

2. Sleeper according to claim 1, **characterised in that** the reinforcement (40) in each case extends at least into the region of the end sections (2, 3; 102, 103) on which the contact surface (112) for the rail (S1, S2) to be supported is formed.

3. Sleeper according to any one of the preceding claims, **characterised in that** the reinforcement (40; 140) is arranged exclusively in the upper quarter of the height (H) of the sleeper (1; 101).

4. Sleeper according to any one of the preceding claims, **characterised in that** the middle section (4; 104) is formed by at least one web (27, 28; 127, 128) freely bridging the distance between the end sections (2, 3; 102, 103), whose width (B) measured in the width direction (BR) aligned transverse to the longitudinal extension (LR) of the sleeper (1; 101) is smaller than the width (B) of the end sections (2, 3; 102, 103) also measured in the width direction (BR) and **in that** the reinforcement is embedded in the web (27, 28; 127, 128).

5. Sleeper according to claim 3, **characterised in that** the height of the web (27, 28; 127, 128) is varied over the distance between the end sections (2, 3; 102, 103) of the sleeper (1; 101).

6. Sleeper according to any one of the preceding claims, **characterised in that** it is shaped mirror-symmetrically in relation to its longitudinal axis (LS).

7. Sleeper according to any one of the preceding claims, **characterised in that** the middle section (4; 104) comprises two webs (27, 28; 127, 128) arranged spaced in the width direction (BR).

8. Sleeper according to claim 6, **characterised in that** the webs (27, 28; 127, 128) in each case has a first section (29; 129) running outwards proceeding from the first end section (2; 102) in the width direction (BR) and a second section (30; 130) which is connected to the end of the first section (29; 129) of the respective web (27, 28; 127, 128) facing away from the first end section (2; 102) and runs back to the second section (3; 103).

9. Sleeper according to claim 8 and any one of claims 6 or 7, **characterised in that** one of the longitudinal sections (141) is embedded in one web (27; 127), the other longitudinal section (142) is embedded in the other web (28; 128) of the middle section (4; 104) and the two narrow sections (143, 144) are in each case embedded in the assigned edge region (45, 46; 145, 146) of the end sections (2, 3; 102, 103).

10. Sleeper according to any one of the preceding claims, **characterised in that** the reinforcement (40; 140) consists of a solid material.

11. Sleeper according to any one of the preceding claims, **characterised in that** the reinforcement (40; 140) is shaped from a bar material.

12. Sleeper according to any one of claims 1 to 8, **characterised in that** the reinforcement (40; 140) consists of a fibre material.

13. Sleeper according to any one of the preceding claims, **characterised in that** on its upper side (7; 107) at least one first alignment aid (132, 133) is formed to which a second alignment aid (134, 135) is assigned on the underside (5; 105) of the sleeper (1; 101) and **in that** the alignment aids (132 - 135) of the sleeper (1; 101) are arranged such that in the case where a sleeper (1; 101) provided with alignment aids (134, 135) in the same manner at least on its underside is placed to form a sleeper stack on the sleeper (1; 101) the alignment aid (132, 133) provided on the upper side (7; 107) of one sleeper (1; 101) cooperates with the second alignment aid (134, 135) present on the underside (5; 105) of the other sleeper (1; 101) placed on this sleeper (1; 101) and fixes the sleepers (1; 101) against one another in a plane aligned parallel to the underside (5; 105) of the sleepers (1; 101).

14. Sleeper according to any one of the preceding claims, **characterised in that** it is manufactured from a plastic/sand mixture, whose plastic content is 10 to 60 mass% and its remainder consists of sand with an average grain diameter of 0.1 to 0.5 mm.

## Revendications

1. Traverse pour superstructure de voie, laquelle traverse est fabriquée d'une seule pièce à partir d'une matière plastique, la traverse (1 ; 101) possédant une forme de base allongée pourvue de deux parties d'extrémité (2, 3 ; 102, 03) qui sont reliées et maintenues à distance par une partie centrale (4 ; 104) de la traverse (1 ; 101) et, sur le côté supérieur (7 ; 107) de la traverse, il est prévu respectivement une surface d'appui (112) destinée respectivement à un rail respectif (S1, S2) en appui sur la partie d'extrémité respective (2, 3 ; 102, 103), une armature (40; 140) s'étendant dans la direction longitudinale (LR) de la traverse (1 ; 101), étant incorporée dans la partie centrale (4, 104), l'armature (40 ; 140) s'étendant sur la longueur de la partie centrale (4 ; 104), l'armature (40 ; 140) étant ancrée à chaque fois dans une zone périphérique (45, 46 ; 145, 146) des parties d'extrémité (2, 3 ; 102, 103) associée à la partie centrale (4 ; 104), dans laquelle la partie d'extrémité (2, 3 ; 102, 103) est ancrée, l'armature (40 ; 140) étant disposée entièrement ou partiellement dans le quart supérieur de la hauteur (H) de la traverse (1 ; 101), **caractérisée en ce que** l'armature (40; 140) est formée à la manière d'une boucle sans fin avec deux parties longitudinales (141, 142) et deux parties étroites (143, 144), dont respectivement l'une des parties étroites (143, 144) s'étend entre les autres extrémités associées l'une à l'autre des parties longitudinales (141,142) et est ancrée dans une des zones périphériques (45, 46 ; 145, 146) des parties d'extrémité (2,3 ; 102, 103) associées à la partie centrale (4 ; 104).

2. Traverse selon la revendication 1, **caractérisée en ce que** l'armature (40) s'étend respectivement au moins jusqu'à ladite zone des parties d'extrémité (2, 3 ; 102, 103) sur laquelle est conçue la surface d'appui (112) pour la glissière (S1, S2) devant être en appui.

3. Traverse selon l'une des revendications précédentes, **caractérisée en ce que** l'armature (40 ; 140) est agencée dans le quart supérieur de la hauteur (H) de la traverse (1 ; 101).

4. Traverse selon l'une des revendications précédentes, **caractérisée en ce que** la partie centrale (4 ; 104) est formée par au moins une passerelle (27, 28 ; 127, 128) pontant librement la distance entre les parties d'extrémité (2, 3 ; 102, 103), dont la largeur (B), mesurée dans le sens de la largeur (BR) orientée transversalement par rapport à l'extension longitudinale (LR) de la traverse (1 ; 101), est inférieure à la largeur (B) des parties d'extrémité (2, 3 ; 102, 103) également mesurée dans le sens de la largeur (BR), et **en ce que** l'armature est intégrée dans la passerelle (27, 28 ; 127,128).

5. Traverse selon la revendication 4, **caractérisée en ce que** la hauteur de la passerelle (27, 28 ; 127, 128) varie grâce à la distance entre les parties d'extrémités (2, 3 ; 102, 103) de la traverse (1 ; 101).

6. Traverse selon l'une des revendications précédentes, **caractérisée en ce qu'**elle est formée est symétrie miroir par rapport à son axe longitudinal (LS).

7. Traverse selon l'une des revendications précédentes, **caractérisée en ce que** la partie centrale (4 ; 104) comporte deux passerelles (27, 28 ; 127, 128) agencées espacées dans le sens de la largeur (BR).

8. Traverse selon la revendication 7, **caractérisée en ce que** les passerelles (27, 28 ; 127, 128) présentent respectivement une première partie (29 ; 129) partant de la première partie d'extrémité (2 ; 102) passant vers l'extérieur dans le sens de la largeur (BR) et une deuxième partie (30 ; 130) qui est raccordée à l'extrémité de la première partie (29 ; 129) de la passerelle (27, 28 ; 127, 128) respective opposée à la première partie d'extrémité (2 ; 102) et revient vers la deuxième partie (3 ; 103).

9. Traverse selon la revendication 8, **caractérisée en ce qu'**une des parties longitudinales (41) dans une passerelle (27 ; 127), l'autre partie longitudinale (142) dans l'autre passerelle (28 ; 128) de la partie centrale (4 ; 104) et les deux parties étroites (143, 144) sont incorporées respectivement dans les zones périphériques (45, 46 ; 145, 146) associées aux parties d'extrémité (2, 3 ; 102, 103).

10. Traverse selon l'une des revendications précédentes, **caractérisée en ce que** l'armature (40 ; 140) est constituée d'un matériau massif.

11. Traverse selon l'une des revendications précédentes, **caractérisée en ce que** l'armature (40 ; 140) est formée à partir d'un matériau en barre.

12. Traverse selon l'une des revendications 1 à 8, **caractérisée en ce que** l'armature (40 ; 140) est constituée à partir d'un matériau fibreux.

13. Traverse selon l'une des revendications précédentes, **caractérisée en ce que** l'on conçoit sur sa surface supérieure (7 ; 107) au moins un premier réglage niveau (132,133) et sur la surface inférieure (5 ; 105) de la traverse (1 ; 101) un deuxième réglage niveau (134, 135) est associé, et **en ce que** les réglages niveau (132 - 135) de la traverse (1 ; 101) sont agencés de telle sorte que lorsque l'on fixe une traverse (1 ; 101) pourvue également au moins sur sa surface inférieure de réglages niveau (134, 135) pour la formation d'une pile de traverses sur la traverse (1 ; 101), le réglage niveau (132, 133) prévu sur la surface supérieure (7;107) d'une traverse (1 ;101) interagit avec le deuxième réglage niveau (34, 35) prévu sur la surface inférieure (5 ; 105) de l'autre traverse (1 ; 101) fixée sur cette traverse (1 ; 101) et fixe d'une manière inamovible les traverses (1 ; 101) l'une contre l'autre dans un plan orienté parallèlement par rapport à la surface inférieure (5 ; 105) des traverses (1 ; 101).

14. Traverse selon l'une des revendications précédentes, **caractérisée en ce qu'**elle est fabriquée à partir d'un mélange matière synthétique - sable, dont la teneur en matière synthétique est de 10 - 60 % en masse et dont le reste de compose de sable ayant un diamètre du grain moyen de 0,1 - 0,5 mm.
